# EUROPÄISCHE PATENTANMELDUNG

(11) **EP 1 813 411 A2**
(43) Veröffentlichungstag der Anmeldung: **01.08.2007**
(21) Anmeldenummer: 06025687.2
(22) Anmeldetag: 12.12.2006
(51) Int. Cl.: B29C 45/27

(54) **Hochbelastbare Dichtungen für Spritzgiessanlagen**

(30) Priorität: 31.01.2006 DE 102006004265
(71) Anmelder: INCOE INTERNATIONAL, INC., 63322 Rödermark (DE)
(72) Erfinder: Goinski, Michael, Dipl.Ing., 63110 Rodgau (DE)
(74) Vertreter: Boecker, Joachim

(57) **Zusammenfassung**

Hochbelastbare Dichtung (11) für Spritzgießanlagen zur Abdichtung des Spaltes zwischen Düsespitze (34) und Spritzseitenteil (22) des Werkzeugs (2). Gemäß der Erfindung ist die Dichtung im Anschnittbereich kuppelförmig (12) ausgebildet mit einer Öffnung (13) in der Kuppelspitze für den Durchtritt der Schmelze. In entsprechender Weise sind die Düsenspitze (34) und die ihr gegenüberliegende wand des Spritzseitenteils (22) des Werkzeugs (2) kuppelförmig ausgebildetet und der Dichtung (11) räumlich angepaßt. Dank dieser Ausführung erhält die Dichtung (6) beim Eindrücken der Düse (3) in der werkzeugausnehmung (21) einen sehr dichten und festen Sitz, aus dem sie durch die unter hohem Druck stehende Schmelze nicht weggedrückt werden kann.

## Beschreibung

Die Erfindung betrifft hochbelastbare Dichtungen für Spritzgießanlagen gemäß dem Oberbegriff des Anspruches 1.

Beim Spritzgießen wird heiße Schmelze von einer Spritzgießmaschine direkt oder über einen Heißkanalverteiler in eine Spritzdüse und von dieser in ein Spritzwerkzeug (Form) gepreßt. Gießmaschine, Heißkanalverteiler, Spritzdüse und Werkzeug sind separate Bauteile, so daß an den Übergängen der Schmelzekanäle von einem Bauteil zum nächsten für eine Dichtung nach außen gesorgt werden muß. An diese Dichtungen werden hohe Anforderungen gestellt, da die in den Schmelzekanälen fließende Schmelze infolge ihrer hohen Temperatur eine geringe Viskosität, vergleichbar mit Wasser, hat und die Schmelze unter hohem Druck steht.

Zwischen Gießmaschine und Heißkanalverteiler sowie zwischen Heißkanalverteiler und Düse werden in der Regal, vorliegend als "Flachdichtung" bezeichnete, Dichtungen in Gestalt von O-Ringen verwendet, die in eine Nut in einer der beiden planparallen Flächen eingelegt werden. Sie dichten den Spalt zwischen den beiden aneinander liegenden planparallelen Flächen; jedoch vermag die Schmelze bei sehr hohen Drücken in den Raum zwischen Dichtung und anliegender Dichtfläche einzudringen und herauszulecken.

Die zwischen Düsenspitze und Werkzeug erforderliche Dichtung erfolgt im Stand der Technik durch eine zylinder-ringförmige Präzisionsdichtung. Diese Art der Dichtung wird im folgenden als Ringspaltdichtung bezeichnet. Die genannte Präzisionsdichtung besteht darin, daß die Düse im Anschnittbereich mit einer kreiszylindrischen Außenfläche versehen ist, die mit hochgenauer Passung in eine entsprechende hohlzylindrischen Fläche in der Werkzeugausnehmung des Werkzeugs paßt. Die beiden metallischen Zylinderringflächen dichten durch direkte Anlage aneinander ohne Zwischenfügung eines Dichtungsmaterials nach außen ab. Bei Einfügung einer Dichtung in einen Spalt zwischen zwei solchen zylindrischen Flächen würde die Dichtung durch den hohen Druck der Schmelze herausgedrückt werden. Wegen der erforderlichen hohen Fertigungsgenauigkeit ist die Herstellung einer solche Präzisionsdichtung teuer, und sie ist sehr empfindlich gegen Verschleiß und Beschädigung.

Die vorgenannten bekannten Dichtungen können nur bei Betriebsdrücken der Schmelze bis etwa 200 bar eingesetzt werden.

Der Erfindung liegt die Aufgabe zugrunde, hochbelastbare Dichtungen für Spritzgießanlagen zu entwickeln, die höheren Drücken als die Dichtungen nach dem Stand der Technik standhalten können und deren Herstellung auch billiger ist.

Zur Lösung dieser Aufgabe werden hochbelastbare Dichtungen für Spritzgießanlagen gemäß dem Oberbegriff des Anspruches 1 vorgeschlagen, welche erfindungsgemäß die im kennzeichnenden Teil des Anspruches 1 genannten Merkmale haben.

Ausgestaltungen der Erfindung sind in den Unteransprüchen genannt.

Die Erfindung bezieht sich auf zwei Arten von Dichtungen. Die Flachdichtungen können, wie für O-Ringe üblich, in eine Nut eingelegt werden. Ihre Besonderheit besteht darin, daß ihr Dichtungsdruck durch den Druck von in die Nut eindringender Schmelze verstärkt wird.

Die Besonderheit der neuen Ringspaltdichtung besteht darin, daß ihr eine Form gegeben wird, die den im Anschnittbereich gegeneinanden zu dichtenden Flächen zwischen Düsenspitze und Werkzeug weitgehend angepaßt ist, und sie in den Raum zwischen den beiden genannten Flächen gepreßt wird. Dabei paßt sich die Dichtung den gegebenen räumlichen Verhältnissen an, so daß leichte Formungenauigkeiten oder Riefen durch die Dichtung ausgeglichen werden. Um zu einer fest sitzenden Dichtung zu gelangen, erhält die Dichtung und erhalten die zur Anlage bestimmten Flächen der Düsenspitze und des Werkzeugs eine Gestalt, durch die ein Herausdrücken oder Aufweiten der Dichtung durch den Druck der Schmelze praktisch nicht möglich ist.

Die hochbelastbaren Dichtungen gemäß der Erfindung werden aus einem hochtemperaturfesten Dichtungsmaterial hergestellt, welches zum Beispiel aus Kunststoff besteht, wie beispielsweise sogenanntes PTFE-Material oder VESPEL-Material. Mit den Dichtungen gemäß der Erfindung können Spritzgießanlagen mit Drücken bis zu 2500 bar betrieben werden.

Anhand der in den Figuren gezeigten Ausführungsbeispiele soll die Erfindung näher erläutert werden. Es zeigen
- Figur 1: den Übergang zwischen einem Heißkanalverteiler und einer Düse mit einer Flachdichtung gemäß der Erfindung,
- Figur 2: ein Detail der Figur 1 mit der Dichtung gemäß der Erfindung in stark vergrößertem Maßstab,
- Figur 3: zeigt den Anschnittbereich einer in einem Werkzeug steckenden Düse mit einer Ringspaltdichtung gemäß der Erfindung zwischen Düsenspitze und Werkzeug,
- Figur 4: zeigt einen Teil der Figur 3 detailierter und im größeren Maßstab mit einer geringfügig modifizierten Dichtung.

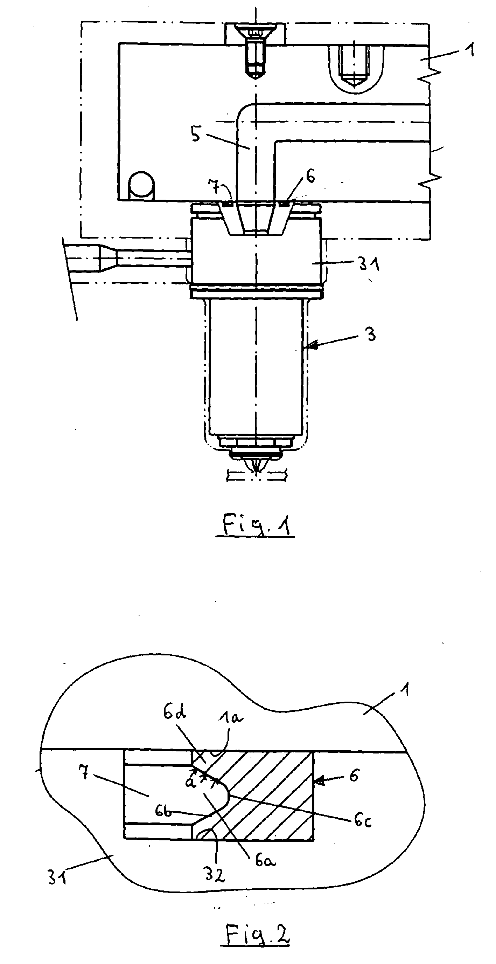

Figur 1 zeigt den Anschluß einer Düse 3 an einen nur teilweise dargestellten Heißkanalverteiler 1, durch dessen Fließkanal 5 die Schmelze von einer Spritzgießmaschine zugeführt wird. Düse 3 und Heißkanalverteiler 1 werden durch Verspannung fest gegeneinander gedrückt. An der Übergangsstelle zwischen Heißkanalverteiler 1 und Düse 3 ist eine Dichtung zwischen zwei planparallelen Flächen erforderlich. Die Dichtung 6 liegt in einer Ringnut 7 in der hinteren (oberen) Planfläche des Düsenkopfes 31. Es handelt sich um eine hochbelastbare Dichtung gemäß der Erfindung, deren Aufbau aus Figur 2 genauer erkennbar ist: An ihrer dem Fließkanal 5 zugewandten Seite ist die Dichtung 6 mit einer umlaufenden Ringnut 6a versehen. Im gezeigten Ausführungsbeispiel hat diese Nut schräge Seiten 6b und einen abgerundeten Boden 6c. Sie ähnelt also in ihrer Querschnittsform einem Dreieck, dessen den Boden 6c der Ringnut bildende Spitze stark abgerundet ist. Wenn in den freien Raum der Nut 7 die unter hohem Druck stehende Schmelze eindringt, so drückt sie, wie durch Pfeile a angedeutet, auf die Seiten 6b der Nut 6a und preßt dadurch die beiden Lippen 6d der Dichtung mit großer Kraft gegen deren Anlageflächen 1a und 32, so daß das Eindringen von Schmelze zwischen Dichtung und Anlageflächen zusätzlich erschwert wird.

Zweckmäßigerweise ist die Höhe der Dichtung 6 vor ihrer Einspannung zwischen der Düse 3 und dem Heißkanalverteiler 1 größer als die Tiefe der Nut 7, zum Beispiel etwa 10%, so daß die Dichtung unter Vorspannung zwischen Düse 3 und dem Heißkanalverteiler 1 liegt.

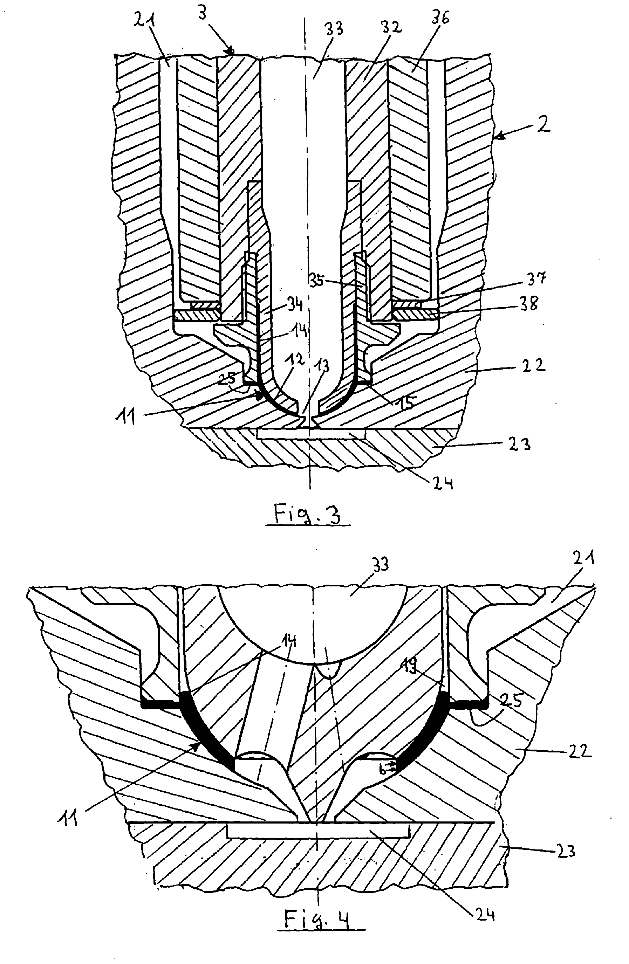

Figur 3 zeigt ein Ausführungsbeispiel einer hochbelastbaren Ringspaltdichtung 11 gemäß der Erfindung im Anschnittbereich der Düse 3 in Verbindung mit einer entsprechenden Ausbildung der Düsenspitze 34 und der der Aufnahme der Düse dienenden Werkzeugausnehmung 21. In der Figur ist das Werkzeug 2 nur angedeutet. Das Spritzseitenteil des Werkzeugs ist mit 22, das Auswurfseitenteil mit 23 und die Kavität mit 24 bezeichnet. Auf dem Düsenschaft 32 mit Fließkanal 33 ist eine Düsenspitze 34 aufgeschoben, die mittels der aufgeschraubten Düsenkappe 35 gehalten wird. 36 bezeichnet ein auf die Düse aufgeschobenes Heizelement, 37 eine Isolierung und 38 einen Führungsring.

Die hochbelastbare Dichtung 11 gemäß der Erfindung ist voll schwarz dargestellt. Die Dichtung 11 ist in ihrem vorderen (im Sinne der Zeichnung unteren) Teil 12 kuppelförmig ausgebildet und besitzt im Zentrum des kuppelförmigen Teils 12 eine zentrale Öffnung 13 für die Schmelze. Entsprechend sind die Düsenspitze 34 und die Werkzeugausnehmung 21 im Spritzseitenteil 22 ausgebildet, so daß der kuppelförmige Teil 12 der Dichtung nach erfolgter Einpressung der Düse in das Werkzeug in dem Spalt 19 (Figur 4) zwischen Düsenspitze und Spritzseitenteil satt an diesen beiden Bauteilen anliegt.

Von der Basis des kuppelförmigen Teils 12 der Dichtung erstreckt sich ein integraler hohlzylindrischer Teil 14 in den sich verengenden Spalt 19 zwischen Düsenspitze 34 und Düsenkappe 35. Ferner erstreckt sich von der Basis des kuppelförmigen Teils 12 der Dichtung 11 ein nach außen gerichteter flacher ringförmiger Dichtungsflansch 15, der zwischen der unteren Stirnseite der Kappe 35 und der gegenüberliegenden Fläche 25 des Spritzseitenteil 22 zu liegen kommt.

Man erkennt, daß die Dichtung dank ihrer Formgebung und der von Düsenspitze und Werkzeugausnehmung einen sehr festen Sitz hat und durch den Druck der Schmelze praktisch nicht bewegt werden kann. Dies ist in Figur 4 deutlicher darstellt, wo durch kleine Pfeile b die Angriffsfläche für die Schmelze erkennbar ist. Die hier angreifenden Druckkräfte können die Dichtung praktisch nicht aus ihrer Lage wegdrücken.

Figur 4 zeigt die in Figur 3 gezeigten Verhältnisse in größerem Maßstab. Die Dichtung 11 ist geringfügig abweichend ausgebildet, indem sie nicht so tief in den sich verjüngenden Spalt 19 zwischen Düsenspitze 34 und Düsenkappe 35 hineinragt.

Wie man erkennt, ist die Wirksamkeit der Ringspaltdichtung gemäß den Figuren 3 und 4 nur zu erreichen, wenn auch die Düsenspitze und die ihr gegenüber liegende Wand des Spritzseitenteils 22 in einer sich der Form der Dichtung anpassenden Weise (oder umgekehrt betrachtet) ausgebildet sind.

Statt kuppelförmig kann die Ringspaltdichtung 11, die Düsenspitze 34 und die dieser gegenüber liegende Wand des Spritzseitenteils 22 des Werkzeugs 2 auch kegelstumpfförmigen oder ähnlich ausgebildeten sein.

Die Herstellung der Dichtungen gemäß der Erfindung aus dem eingang genannten Hochtemperatur-Dichtungsmaterial ist für die Flachdichtungen (Figuren 1 und 2) und die Ringspaltdichtungen (Figuren 3 und 4) zwischen Düsenspitze und Werkzeug unterschiedlich:

Die Flachdichtungen können beispielsweise durch Ausstanzen von Ringen aus dem erhältlichen plattenförmigen Material gewonnen werden, indem in die Innenseite der Ringe durch spanabhebende Bearbeitung die umlaufende Ringnut 7 eingearbeitet wird.

Die Herstellung einer Ringspaltdichtung erfolgt zunächst durch Ausstanzung eines Ringes oder einer Kreisscheibe, in die ein zentrales Loch gebohrt wird. Der so gewonnene Ring wird dann in einem thermischen Fließprozess unter Hitze in die gewünschte Form der Dichtung gepreßt. Leichte Ungenauigkeiten oder Riefen werden, wie bereits angedeutet, beim Einpressen der Düse in die Werkzeugausnehmung ausgeglichen.

## Patentansprüche

1. Hochbelastbare Dichtung für Spritzgießanlagen **dadurch gekennzeichnet, daß** die Dichtung (6,11) aus Hochtemperatur-Dichtungsmaterial besteht und eine solche Gestalt hat, daß der Anpreßdruck der Dichtung (6) gegen die Dichtflächen durch den Druck der Schmelze verstärkt wird und/oder eine soche Gestalt hat, daß die Dichtung (11) durch den Druck der Schmelze praktisch nicht aus ihrer räumlichen Lage herausdrückbar oder aufweitbar ist.

2. Hochbelastbare Dichtung nach Anspruch 1, **dadurch gekennzeichnet, daß** eine Dichtung (6), die in an sich bekannter Weise zur Abdichtung des Spalts zwischen zwei planparallelen Flächen (1a,32), die einen Fließkanal (5) für Schmelze umgeben, dient, aus einem Ring besteht, der an seiner dem Fließkanal zugewandten Seite (6b) mit einer Ringnut (7) versehen ist (Flachdichtung).

3. Hochbelastbare Dichtung nach Anspruch 2, **dadurch gekennzeichnet, daß** die Ringnut (6a) einen dreieckförmigen Querschnitt hat, dessen den Boden (6c) der Ringnut bildende Spitze abgerundet ist.

4. Hochbelastbare Dichtung nach einem der Ansprüche 2 oder 3, **dadurch gekennzeichnet, daß** der Dichtungsring (6) in eine Nut (7) in einer der beiden planparallelen Flächen einlegbar ist.

5. Hochbelastbare Dichtung nach Anspruch 4, **dadurch gekennzeichnet, daß** die Höhe der Dichtung (6) im unbelasteten Zustand größer ist, beispielsweise etwa 10%, als die Tiefe der Nut (7).

6. Hochbelastbare Dichtung nach Anspruch 1, **dadurch gekennzeichnet, daß** die Dichtung (11) so geformt ist, daß sie sich dem Raum zwischen den beiden gegeneinander abzudichtenden Bauteilen (34, 22) anpaßt.

7. Hochbelastbare Dichtung nach Anspruch 1 und 6, **dadurch gekennzeichnet, daß** zur Abdichtung zwischen Düsespitze (34) und Spritzseitenteil (22) des Werkzeugs (2) die Düsenspitze im Anschnittbereich kuppelförmig (12), kegelstumpfförmig oder ähnlich ausgebildet ist mit einer Öffnung (13) in der Kuppelspitze für den Durchtritt der Schmelze und daß die Düsenspitze (34) und die ihr gegenüberliegende Wand des Spritzseitenteils (22) des Werkzeugs der kuppelförmigen oder kegelstumpfförmigen oder ähnlich ausgebildeten Dichtung (11) räumlich angepaßt sind.

8. Hochbelastbare Dichtung nach Anspruch 7, **dadurch gekennzeichnet, daß** sich an die Basis des kuppelförmigen oder kegelstumpfförmigen oder ähnlich ausgebildeten Teils (12) der Dichtung (11) ein hohlzylindrischer Dichtungsabschnitt (14) anschließt, der in Einbaulage zwischen der Außenwand der Düsenspitze (34) und der auf die Düse aufgeschraubten Düsenkappe (35) liegt.

9. Hochbelastbare Dichtung nach einem der Ansprüche 7 oder 8, **dadurch gekennzeichnet, daß** sich an die Basis des kuppelförmigen oder kegelstumpfförmigen oder ähnlich ausgebildeten Teils (12) der Dichtung ein nach außen gerichteter flacher ringförmiger Dichtungsflansch (15) anschließt, der in Einbaulage der Dichtung zwischen der vorderen Stirnseite der Düsenkappe (35) und einer entsprechenden Anlagefläche des Spritzseitenteils (22) des Werkzeugs (2) zu liegen kommt.

10. Düse und Werkzeug zur Aufnahme einer Dichtung gemäß einem der Ansprüche 6 bis 8, **dadurch gekennzeichnet, daß** die Düsenspitze (34) und die ihr gegenüberliegende Wand des Spritzseitenteil (22) des Werkzeugs (2) kuppelförmig oder kegelstumpfförmigen oder ähnlich ausgebildet sind.
